# EUROPEAN PATENT SPECIFICATION

(11) **EP 1 428 031 B1**
(45) Date of publication and mention of the grant of the patent: **28.07.2010**
(21) Application number: 02765748.5
(22) Date of filing: 09.09.2002
(51) Int. Cl.: G01N 35/00, B01L 3/00

(54) **METHOD HANDLER FOR MICROFLUIDIC INSTRUMENTS**
VERFAHRENSKONTROLLVORRICHTUNG FÜR MIKROFLUIDISCHE GERÄTE
PROGRAMME DE TRAITEMENT DE PROCEDES POUR INSTRUMENTS MICROFLUIDIQUES

(30) Priority: 17.09.2001 SE 0103087; 17.09.2001 US 953155
(43) Date of publication of application: 16.06.2004
(73) Proprietor: GYROS PATENT AB, 751 83 Uppsala (SE)
(72) Inventor: BIELIK, Robert, S-740 22 BÄLINGE (SE); NYGARD, Anders, S-752 30 UPPSALA (SE)
(74) Representative: Franks, Barry Gerard
(86) International application number: PCT/SE2002/001606
(87) International publication number: WO 2003/025585

(56) References cited:
- WO-A1-00/58719
- WO-A2-02/00343

## Description

### Field of the invention

The present invention relates to a process for providing a dynamic method set including methods associated to a special microfluidic device type used in a microfluidic system. The present invention also relates to a computer program product, a computer program element and a carrier comprising the computer program product.

### Background of the invention

The term "microfluidic" refers to a system or device comprising one or a network of chambers and/or channels, which have micro scale dimensions, e.g., having at least one cross sectional dimension in the range from about 0,1 µm to about 500 µm. Microfluidic devices are often fabricated using photolithography, wet chemical etching, injection-molding, embossing, and other techniques similar to those employed in the semiconductor industry for producing the networks in uncovered form in a substrate. The uncovered network is subsequently covered by a top substrate. The resulting devices can be used to perform a variety of sophisticated chemical and biological analytical techniques.

Microfluidic analytical systems have a number of advantages over conventional chemical or physical laboratory techniques. For example, microfluidic systems/devices are particularly well adapted for analyzing small sample sizes in the µl-range, typically making use of samples on the order of nanoliters (1-1000nl) and even picoliters (1-1000 pl). The channel defining substrates may be produced at relatively low cost, and the channels can be arranged to perform numerous analytical operations, including mixing, dispensing, valving, reactions, detections, electrophoresis, and the like. The analytical capabilities of microfluidic systems are generally enhanced by increasing the number and complexity of network channels, reaction chambers, and the like.

Substantial advances have recently been made in the general areas of flow control and physical interactions between the samples and the supporting analytical structures.

Flow control management may make use of a variety of mechanisms, including the patterned application of voltage, current, or electrical power to the substrate (for example, to induce and/or control electrokinetic flow or electrophoretic separations). Alternatively, fluid flows may be induced mechanically through the application of differential pressure, acoustic energy, or the like. Selective heating, cooling, exposure to light or other radiation, or other inputs may be provided at selected locations distributed about the substrate to promote the desired chemical and/or biological interactions. Similarly, measurements of light or other emissions, electrical/electrochemical signals, and pH may be taken from the substrate to provide analytical results. As work has progressed in each of these areas, the channel size has gradually decreased while the channel network has increased in complexity, significantly enhancing the overall capabilities of Microfluidic systems.

The microfluidics technologies/devices are capable of controlling and transferring tiny quantities of liquids to allow biological assays to be integrated and accomplished on a small scale. The miniaturization of biological separation and assay techniques implies that multiple "experiments" can be accomplished on a "chip" small enough to fit in the palm of your hand. Tiny quantities of solvent, sample, and reagents are steered through narrow channels on the chip, where they are mixed and analyzed by such techniques as electrophoresis, fluorescence detection, immunoassay, or indeed almost any classical laboratory method.

Today a number of products varying in many respects are available. Laboratory chips may be made from plastic, glass, quartz or even silicon. The fluid may be driven by spinning (centrifugal forces), capillarity in the network, mechanical pressure or vacuum pumps, inertia, or by one of several electrical methods; fluid flow can be diverted around the chip by mechanical valves, surface tension, voltage gradients, or even electromagnetic forces.

In the technique of using centrifugal forces to drive the fluid a disc that can be spinned is used. Some discs have been of the same physical format as conventional CDs. Samples are placed at an inner position, e.g. near the center of the disc, and centrifugal forces, created as the disc rotates, push them to an outer position through channels cut into the plastic, circumventing the need to design sophisticated electrokinetic or mechanical pumping structures.

As will become evident in the forth-coming description the present invention is in particular applicable to (but not limited to) micro-analysis systems that are based on micro-channels formed in a rotatable, usually plastic, disc, often called a "lab on a chip".

Microfluidic devices/discs can be used to perform analysis and separation on small quantities of fluids. In order to reduce costs it is desirable that the discs should not be restricted to use with just one type of reagent or fluid but should be able to work with a variety of fluids.

Furthermore it is often desirable during the preparation of samples that the disc permits the user to dispense accurate volumes of various predetermined combinations of fluids or samples without modifying the disc. Microanalysis devices for fluids provided in a rotatable disc are described e.g. in WO-97/21090, WO-98/07019, WO-98/53311, WO-O1/46465, WO-O1/47638, WO-02/41997, and WO-02/41998.

One general object of present invention is to increase the performance of a microfluidic system.

A more specific object of the present invention is to provide powerful software tools for creating and performing various processes including sample preparation, treatment of liquids, various chemical and biochemical steps etc in a microfluidic device.

### Summary of the invention

The invention can be described shortly as a method-developing tool, which consists of several parts used to check and create different methods for microfluidic instruments. The part that creates methods can be called the Method Editor (ME). It is used to create a scheme of operations that together with the instrument builds up an application for a specific microfluidic device type. The method-developing tool also checks if a method is executable on a specific instrument. This is done in a part called Batch Run (BR).

The above-mentioned objects are achieved by a process, a computer program product, a computer program element, and carrier according to the independent claims or by any other means suggested herein.

Preferred embodiments are set forth in the dependent claims.

A number of advantages are provided by the present invention. The process for developing methods for microfluidic systems is faster, more cost effective, more systematic and logical. The invention also offers a good survey and handling of available operations and developed methods.

### Brief description of the drawings.

Fig. 1 is a block diagram depicting schematically a microfluidic system.
Fig. 2 is a schematic picture of a microfluidic device in form of a disc.
Fig. 3a is a flowchart illustrating an embodiment of the process according to the invention.
Fig. 3b is a flowchart illustrating an embodiment of a process that could be added to the process according to Fig. 3a.

### Detailed description of preferred embodiments

The present invention relates to a process for providing a dynamic method set including methods associated to a special microfluidic device type used in a microfluidic system. The present invention also relates to a computer program product, a computer program element and a carrier comprising the computer program product.

A microfluidic system may comprise a control unit and a microfluidic instrument. Such a system is called a Stand Alone System. Each system has its own data and operates completely stand alone. The interaction with the system may be performed at an associated Personal Computer (PC).

Another system can be considered as a group of instruments plus a common persistent storage location, e.g. database. Many instruments can operate on the same set of data (Method Data, Microfluidic Device Data, etc). All interaction with the system needs to be performed at an instrument connected computer. This second system is often called a Distributed Database Solution.

In a third variant, the distributed solution, the system is considered as a group of instruments, a common storage persistent storage location (database), and a number of clients. With this solution the same functionality as in the above-mentioned Distributed Database Solution is reached. In addition there will be a possibility to interact with the system from non instrument connected computers. The solution may provide additional functionalities, e.g.:
- Remote monitoring of instruments (checking of process status, alarms etc).
- Perform functions that are not instrument specific (Method Development, Evaluation of processed data, etc )
With this third variant it may be possible to control (Start, Pause, Abort) the processing remotely, that is, from a non instrument connected computer.

An operator/user can control and monitor the performance of the microfluidic instrument from the control unit. The microfluidic instrument comprises a number of different stations, each station being capable of performing one or a number of defined operations. Different types of microfluidic instruments consist of different kinds of stations or number of stations. Therefore, some operations will not be provided for or applicable on a certain type of microfluidic instrument.

The operations are initiated from the control unit.

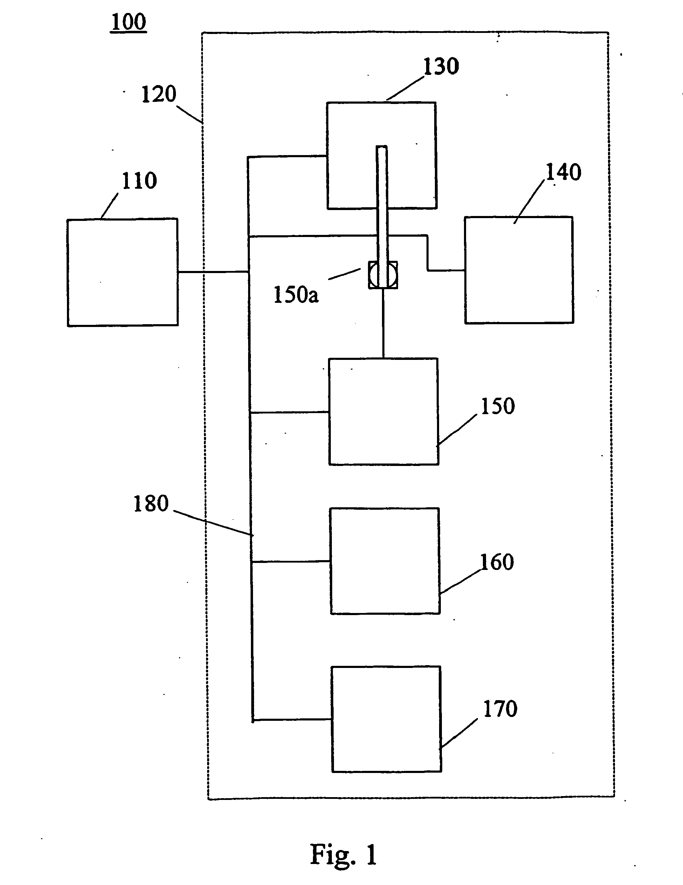

Fig. 1 is a block diagram depicting schematically a microfluidic system 100 that includes a control unit 110 and an instrument 120 comprising a sample and reagent station 130, a wash station 140, a liquid transfer station 150, at least one station 160 for implementing transport of liquid within the microfluidic device e.g., a spinner station and a detector station 170. Two or more stations may be integrated with each other and appear physically as one station that is capable of performing the functions of the integrated stations.

The control unit 110 may be one or more computers outside the instrument and/or one or more central processors within the instrument. The control unit is connected to the instrument 120 and its different stations via a conductor or data bus 180 and operation orders are transmitted either as electrical or optical signals or included in a suitable predetermined protocol to hardware circuits distributed between the stations.

The sample and reagent station 130 typically comprises means for storing samples, reagents or other liquids. Said samples, reagents or other liquids is stored in some kind of container, such as a micro plate or multiwell plate, a test tube rack or a test tube. Said plate is designed as a matrix of small containers or wells. Said plate can have different sizes depending on the number of wells. The container may be loosely fixed at a container holder, for instance a so called carousel, which is a circular revolving plate.

The liquid transfer station 150 may have a robot 150a that transfer at least one sample or any other predetermined liquid aliquot at a time from the sample and reagent station 130 to a microfluidic device, for instance in the form of a disc that can be spinned. The station have means for transfer of liquid samples, and other liquids, for instance a number of injection needles connected to syringe pumps or a number of solid pins may be used for the transfer of samples. Said needles and pins may be configured in different numbers of rows and columns having different distance between the tips in both directions. Another alternative is a microdispensor for dispensing droplets, e.g. the microdispensor described in WO 9701085.

Said needles and pins may or may not be washed in a wash solution between the transfers of samples and reagents. Washing is done by means placed in a wash station 140.

The liquids dispensed to a microfluidic device are transported within the device by means associated with the station 160 for implementing liquid transport, e.g. of the types discussed above. This station may be a spinner station in case the microfludic device is adapted to permit liquid transport caused by spinning. The result of a process carried out within the microfluidic device is determined by means for detecting (a detector) which is located in a detector station 170.

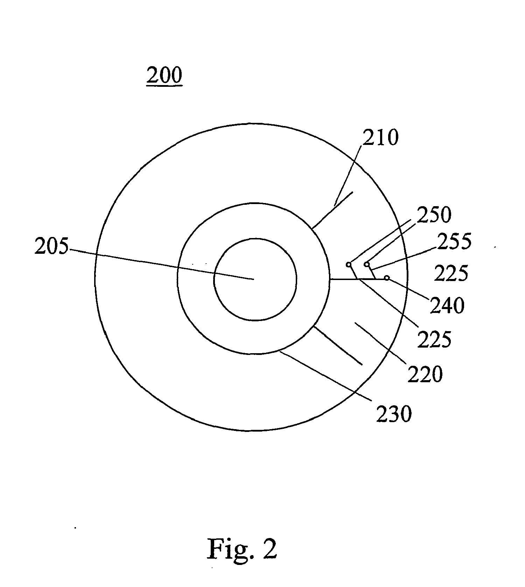

Fig. 2 is a schematic picture of a rotatable microfluidic disc 200 of the types discussed aboveabove. A rotatable disc typically has a central recess 205 for a disc holder. Samples may be placed near the center of the disc and centrifugal forces, created as the disc rotates, may push them out through channels 210 cut into the plastic, circumventing the need to design sophisticated electrokinetic or mechanical pumping structures. Only one section 220 is depicted on the illustrated disc 200. A section on a disc is a group of microstructures 225 that are connected to a common distribution channel 230. A microstructure is a system of microchannels, which is used to perform a process protocol on a sample. A number of structures or channels 210 extend, for instance radially, from the common distribution channel 230 and ends in a detection position 240 where detection may occur. Inlet positions 250 are distributed along the channels. A small channel 255 extends from the inlet 250 and connects to said micro channel 210. Samples, liquids and reagent may be dispensed here.

As shown in fig. 1, each of said stations is connected to the control unit 110 and controlled and monitored from the control unit 110 by means of a number of operations. A software operation is defined as a logical group of hardware instructions, which are performed to accomplish a certain function, such as:
- Implementing transport of liquid, for instance spinning the device if the device is in the form of a disc that can be spinned in order to induce liquid flow.
- Sample transfer to a specific common distribution channel or a specific microstructure.
- Reagent transfer to a specific common distribution channel or a specific microstructure.
- Position the microfluidic device.
- Incubate the liquids at a certain position in the microstructures for a specific time.
- Detection, i.e. detection of the results of the method carried out in the microfluidic device.
- Wash, for instance of dispensing means (needles, syringes etc)

An operation may consist of a number of steps. A step is a non-dividable instruction, such as a ramp in a spin operation. A set can be constituted by putting together a number of these operations in a desired order. Such a set is defined as a method that gives the total processing of a microfluidic device in the instrument and controls all parts conducted within the instrument. The set/method thus prescribes a type of microfluidic device and defines a set of actions, operations. It may prescribe halting for conducting steps outside the instrument, for instance incubations at constant temperature when the method concerns cell culturing. The method may comprise one or more subsets of operations that can be iterated in a loop a predetermined number of times. Such a subset may for instance be that
e) a selected series (subset) of operations is performed on a certain number selected microchannel at a time until a predetermined total number of microchannel structures has ben subjected to the subset,
e) the same subset of operations is repeated on the same microchannel structure(s), e.g. a particular part of a washing procedure for conditioning or cleaning the microchannel structure(s) or their content, etc.

As stated above, the present invention relates to a process for providing a dynamic method set including methods associated to a special microfluidic device type used in a microfluidic system. It is a generic tool in the meaning that it supports a method developer to build methods for in principle any application, i.e. it can support all operations that are to be performed within the instrument. The invention can be described as a Method Handler (MH), which consists of several parts used to check and create different methods. The part that creates methods can be called the Method Editor (ME). It is used to create a scheme of operations that together with the microfluidic device forms an application for a specific microfluidic device type. MH also checks if a method is executable on a specific instrument. This is done in a part called Batch Run (BR).

The method itself describes an application from a logical point of view, i.e. the sequence of operations, how to perform them, etc. The scheme of operations that builds up a method has no knowledge if it can be executed on a certain instrument. The ME is responsible for checking that a method is executable from a logical point of view, i.e. if the method complies with rules set up for a particular microfluidic device including also the application(s) for which the device is adapted. These rules will henceforth be called logical rules.

The BR is responsible for checking if the method is executable on a specific instrument from a physical and chemical point of view and if the settings of the instrument are acceptable and appropriate.

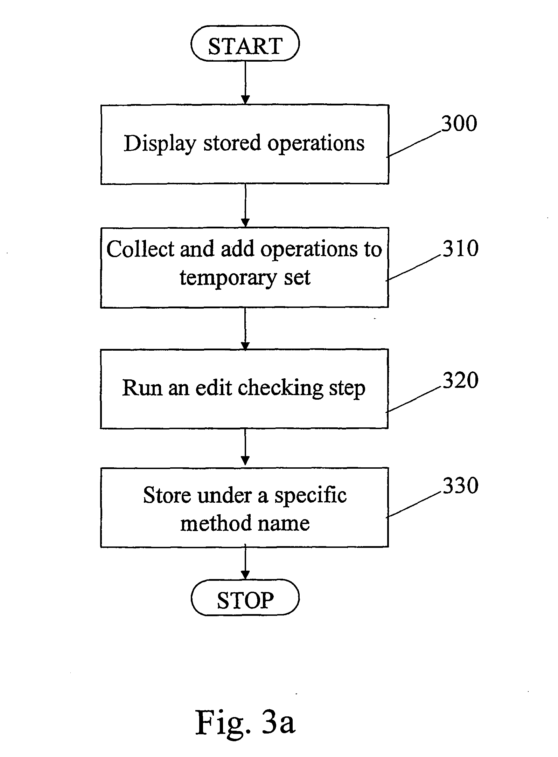

An embodiment of the Method Handling tool and the process according to the invention will now be described in more detail with reference to the flowchart in fig. 3a. The process includes following steps:
- step 300: displaying predetermined operations of stored predetermined microfluidic device operations on a display or screen;
- step 310: collecting a number of predetermined operations from said stored and displayed predetermined microfluidic device operations and adding said collected predetermined operations to a temporary set;
- step 320: running an edit checking step for accepting or rejecting said temporary set of operations, wherein said edit checking step makes use of a set of rules related to the special microfluidic device type and to other logical rules;
- step 330: storing said checked and accepted microfluidic device type set of operations, i.e. said temporary set in accepted form, under a specific method name and in a format applicable for transfer to said dynamic method set.

Further, some of the collected and added operations may require additional information or data, here defined as operation settings. Required operation settings associated to an operation are inquired and acquired may be inserted between step 310 and 320, as a step 315 (not shown in figure 3a).

The invented process can be performed on an ordinary personal computer having a display or screen and input means, for instance a mouse and a keyboard. The method handler comprises a user interface for displaying predetermined operations of stored predetermined microfluidic device operations on a display or screen. The user interface provides a window having a button or tab for each selectable operation. When the user selects an operation, he/she has only to point at the desired operation button and to click the button using a mouse button. As the user selects operations, the computer or processor collects the corresponding predetermined microfluidic device operations from a computer readable storage or memory or server or other medium in the order determined by the user/method developer, adding said collected predetermined operations in said order to a temporary set in a database or an allocated memory area in a computer readable storage or memory or server or other medium. For some of the operations, the method handler software will inquire for completing information and instructions, operation settings, e.g. spinning velocity or spinning time. When the user is finished with the selection of operation, the method handler software will run an edit checking step for accepting or rejecting said temporary set of operations. Said edit checking step makes use of a set of rules and conditions related to the special microfluidic device type and to other logical rules e.g. related to the application intended. If the user has made mistakes in filling in the completing information, such as operation settings, and instructions, the edit checking step will reject the temporary set or ask for completing information. When the temporary set is accepted it is stored under a specific method name and in a format applicable for transfer to said dynamic method set.

Said associated dynamic method set is dynamic in that the application specific methods and/or operations may be added or amended or deleted if needed.

As stated above, the invention uses a set of rules and conditions to determine if the method is executable. It is basically a check if all necessary information are in place.

Here follows, as an example, an non-exhaustive list of suitable rules:
- If spin operation is selected, is spin step defined?
- Are positions on the microfluidic device selected?
- Are necessary liquids defined?

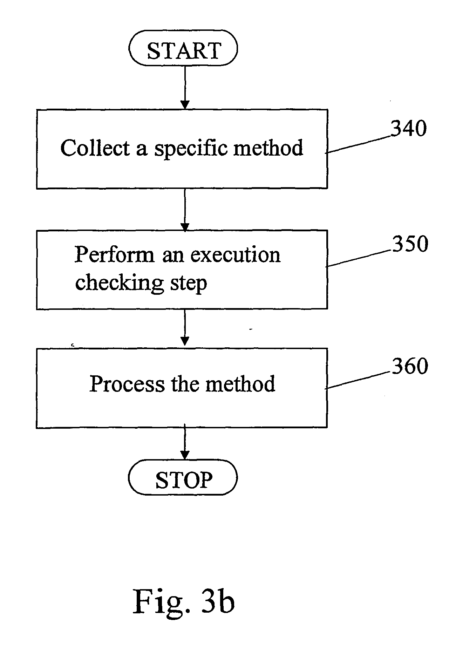

Further, the invented process may include an executing step (Batch Run) comprising the following steps, as illustrated in the flowchart in fig. 3b:
- step 340: collecting one set of microfluidic device type operations associated with a specific method name;
- step 350: performing a checking step to see if the collected set is executable (execution checking step) by applying a set of rules and conditions related to the microfluidic system where the set of operations is to be processed, and;
- step 360: processing the microfluidic device with the microfluidic system using the collected set of operations.

When the user (method developer) selects a specific method, the user will initiate an executing step of the method handler tool. The method handler software causes the computer to perform a collection of one set of microfluidic device type operations associated with the selected specific method name and an execution of a checking step by applying a set of rules and conditions related to the microfluidic system where the set of operations is to be processed. If the user has made mistakes, e.g. in filling in the completing information and instructions or the selected method is not applicable on the present system instrument or its configuration, the Batch Run checking step will reject the method. The things to check can be:
- Does the instrument have the right hardware and hardware configuration and settings to perform the different operations?
- Is the method executable? I.e. does it contain all information needed to execute the method.
- Have the right liquids been loaded?

If the method is accepted, the system can use the microfluidic device within the microfluidic system for processing the set of operations defined by the method.

Here follows a short presentation of how the Method Handler tool is used. A method developer using the invented Method Handler tool may take following steps:
- Chose type of microfluidic device;
- Build up the method (or sequence of operations) from information related to the type of Microfluidic device;
- Apply a set of rules in ME checking step;
- Save checked method and then distribute storage medium with checked method or distribute checked method via internet, e.g. user may download from provider server, to user/customer.
- When the method shall be executed the MH checks, by applying Batch Run -rules, if the connected instrument can process the selected method. This step is called the BR checking step or execution checking step and makes use of a rules that are related to the system including the instrument and the microfluidic device contemplated. If the method is accepted it is only to run and use the method.

If a user receives the method stored at a storage medium or downloads it from internet and transforms it to a useful format, the BR checking step includes checking that the transformed method is executable in the intended system.

The invention also relates to a computer program product stored at a computer program product readable means, having thereon computer program code means, when said program is loaded, to make a computer to perform the process according to any of claims 1-5.

The invention also relates to a computer program element for providing a dynamic method set including methods associated to a special microfluidic device type used in a microfluidic system. The computer program code comprises at least following computer executable computer program elements:
- a user interface element, said user interface element being capable of displaying predetermined operations stored in a predetermined microfluidic device operations storage;
- an operation collecting element, said collecting element being capable of collecting a number of predetermined operations from said stored and displayed predetermined microfluidic device operations;
- an adding element, said adding element being capable of adding said collected predetermined operations to a temporary set;
- an edit checking step element, said edit checking element being capable of running an edit checking step for accepting or rejecting said temporary set of operations, wherein said edit checking step makes use of a set of rules related to the special microfluidic device type and to other logical rules;
- a storing element, said storing element being capable of storing said checked and accepted microfluidic device type set of operations under a specific method name and in a format applicable for transfer to said dynamic method set.

Further, the computer program element may comprise one or more of the elements:
- a method collecting element, said element being capable of collecting one set of microfluidic device type operations associated with a specific method name;
- an execution checking step element, said element being capable of performing the execution checking step by applying a set of rules and conditions related to the microfluidic system where the set of operations is to be processed, and;
- a processing step element, said element being capable of processing the microfluidic device with the microfluidic system using the set of operations.

The computer program element may also comprise an inquiring and acquiring element, said element being capable inquiring and acquiring required operation settings associated to a collected and added operation.

The present invention also relates to a carrier having thereon at least one dynamic method set including methods associated to a special microfluidic device type used in a microfluidic system comprising at least one central processor and storage means for computer program code. Each method in said dynamic method set is accepted for a special Microfluidic device type and defined by a specific method name and said method comprises a number of operations causing the Microfluidic system to perform said operations in a predetermined order. The carrier may be a record medium, a computer memory, a Read-Only Memory or an electrical carrier signal. The carrier, in particular if it is outside the system to be used, may comprise the method set stored in a formatted way, e.g. XML, that allows for a syntax check when the method is imported to the system.

The process may also contain additional steps, for instance a step in which a method after the edit checking step, either before or after the storing step, is accepted in the sense that the method becomes static without possibility to further edit or remove it from the dynamic method set. The computer program product, the computer program element and the carrier may comprise the corresponding feature.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Process for providing a dynamic method set including methods associated to a special microfluidic device type used in a microfluidic system comprising at least one central processor and storage means for computer program code, **characterized in that** the process includes following steps:
- displaying predetermined operations of stored predetermined microfluidic device operations;
- collecting a number of predetermined operations from said stored and displayed predetermined microfluidic device operations and adding said collected predetermined operations to a temporary set;
- running an edit checking step for accepting or rejecting said temporary set of operations, wherein said edit checking step makes use of a set of rules related to the special microfluidic device type and to other logical rules;
- storing said checked and accepted microfluidic device type set of operations under a specific method name and in a format applicable for transfer to said dynamic method set.

2. Process according to claim 1, **characterized in that** said associated dynamic method set is dynamic **in that** application specific methods and/or operations may be added/amended/deleted if needed.

3. Process according to claim 1, **characterized in that** the process further includes an execution step comprising the following steps:
- collecting one set of microfluidic device type operations associated with a specific method name;
- performing an executing checking step by applying a set of rules and conditions related to the microfluidic system where the set of operations is to be processed, and;
- processing the microfluidic device with the microfluidic system using the set of operations.

4. Process according to claim 1, **characterized in that** said operations can be one of the following operations:
- Spinning the microfluidic device; or
- Sample transfer to a specific common channel or microstructure; or
- Reagent transfer to a specific common channel or microstructure; or
- Position the microfluidic device; or
- Incubate or hold the microfluidic device for a specific time; or
- Detection; or
- Wash.

5. Process according to claim 1, **characterized in that** the process includes the following step:
- inquiring and acquiring of required operation settings associated to a collected and added operation.

6. Computer program product stored at a computer program product readable means, **characterized in that** said program product is adapted to perform the process according to any of claims 1-5.

7. A computer program element for providing a dynamic method set including methods associated to a special microfluidic device type used in a microfluidic system, **characterized in that** the computer program code comprises at least following computer executable computer program elements:
- a user interface element, said user interface element being capable of displaying predetermined operations stored in a predetermined microfluidic device operations storage;
- an operation collecting element, said collecting element being capable of collecting a number of predetermined operations from said stored and displayed predetermined microfluidic device operations;
- an adding element, said adding element being capable of adding said collected predetermined operations to a temporary set;
- an edit checking step element, said edit checking element being capable of running an edit checking step for accepting or rejecting said temporary set of operations, wherein said edit checking step makes use of a set of rules related to the special microfluidic device type and to other logical rules;
- a storing element, said storing element being capable of storing said checked and accepted microfluidic device type set of operations under a specific method name and in a format applicable for transfer to said dynamic method set.

8. A computer program element according to claim 7, **characterized by**:
- a method collecting element, said element being capable of collecting one set of microfluidic device type operations associated with a specific method name;
- an executing checking step element, said element being capable of performing the execution checking step by applying a set of rules and conditions related to the microfluidic system where the set of operations is to be processed, and;
- a processing step element, said element being capable of processing the microfluidic device with the microfluidic system using the set of operations.

9. A computer program element according to claim 7, **characterized by**:
- an inquiring and acquiring element, said element being capable inquiring and acquiring required operation settings associated to a collected and added operation.

10. A carrier having thereon at least one dynamic method set including methods associated to a special microfluidic device type used in a microfluidic system comprising at least one central processor and storage means for computer program code, **characterized in that**, each method in said dynamic method set is accepted for a special microfluidic device type and defined by a specific method name and said method comprises a number of operations causing the microfluidic system to perform said operations in a predetermined order.

11. The carrier according to claim 10, **characterized in that** the carrier is a record medium.

12. The carrier according to claim 10, **characterized in that** the carrier is a computer memory.

13. The carrier according to claim 10, **characterized in that** the carrier is a Read-Only Memory.

14. The carrier according to claim 10, **characterized in that** the carrier is an electrical carrier signal.

## Patentansprüche

1. Verfahren zum Bereitstellen eines dynamischen Verfahrenssatzes, der Verfahren umfaßt, die mit einem speziellen mikrofluidischen Vorrichtungstyp verbunden sind, welcher in einem mikrofluidischen System verwendet wird, das wenigstens eine zentrale Prozessor- und Speichereinrichtung für Computerprogrammcode aufweist, **dadurch gekennzeichnet, daß** das Verfahren die folgenden Schritte aufweist:
- Anzeigen vorgegebener Arbeitsschritte gespeicherter vorgegebener mikrofluidischer Vorrichtungsarbeitsschritte;
- Sammeln einer Anzahl vorgegebener Arbeitsschritte aus den gespeicherten und angezeigten vorgegebenen mikrofluidischen Vorrichtungsarbeitsschritten und Hinzufügen der gesammelten vorgegebenen Arbeitsschritte zu einem provisorischen Satz;
- Laufenlassen eines Editierprüfungsschritts, um den provisorischen Satz von Arbeitsschritten anzunehmen oder abzulehnen, wobei der Editierprüfungsschritt einen Regelsatz, der sich auf den speziellen mikrofluidischen Vorrichtungstyp bezieht, und andere logische Regeln nutzt;
- Speichern des geprüften und angenommenen Satzes von Arbeitsschritten des mikrofluidischen Vorrichtungstyps unter einem spezifischen Verfahrensnamen und in einem Format, das für die Übertragung auf den dynamischen Verfahrenssatz anwendbar ist.

2. Verfahren nach Anspruch 1, **dadurch gekennzeichnet, daß** der zugehörige dynamische Verfahrenssatz insofern dynamisch ist, daß anwendungsspezifische Verfahren und/oder Arbeitsschritte nach Bedarf hinzugefügt/abgeändert/gelöscht werden können.

3. Verfahren nach Anspruch 1, **dadurch gekennzeichnet, daß** das Verfahren ferner einen Ausführungsschritt umfaßt, der die folgenden Schritte aufweist:
- Sammeln eines Satzes von Arbeitsschritten eines mikrofluidischen Vorrichtungstyps, die zu einem spezifischen Verfahrensnamen gehören;
- Durchführen eines Ausführungsprüfungsschritts durch Anwenden eines Regelsatzes und von Bedingungen, die sich auf das mikrofluidische System beziehen, wo der Satz von Arbeitsschritten verarbeitet werden soll, und
- Verarbeiten der mikrofluidischen Vorrichtung mit dem mikrofluidischen System unter Verwendung des Satzes von Arbeitsschritten.

4. Verfahren nach Anspruch 1, **dadurch gekennzeichnet, daß** die Arbeitsschritte einer der folgenden Arbeitsschritte sein können:
- Schleudern der mikrofluidischen Vorrichtung; oder
- Probenübertragung zu einem spezifischen gemeinsamen Kanal oder eine Mikrostruktur; oder
- Reagenzübertragung zu einem spezifischen gemeinsamen Kanal oder eine Mikrostruktur; oder
- Positionieren der mikrofluidischen Vorrichtung; oder
- Inkubieren oder Halten der mikrofluidischen Vorrichtung für eine spezifische Zeitdauer; oder
- Erfassen bzw. Bestimmen; oder
- Waschen.

5. Verfahren nach Anspruch 1, **dadurch gekennzeichnet, daß** das Verfahren den folgenden Schritt umfaßt:
- Abfragen und Erfassen benötigter Arbeitseinstellungen, die zu einem gesammelten und hinzugefügten Arbeitsschritt gehören.

6. Computerprogrammprodukt, das auf einer Computerprogrammprodukt-lesbaren Einrichtung gespeichert ist, **dadurch gekennzeichnet, daß** das Computerprogrammprodukt geeignet ist, um das Verfahren nach einem der Ansprüche 1 - 5 durchzuführen.

7. Computerprogrammelement zum Bereitstellen eines dynamischen Verfahrenssatzes, der Verfahren umfaßt, die mit einem speziellen mikrofluidischen Vorrichtungstyp verbunden sind, welcher in einem mikrofluidischen System verwendet wird, **dadurch gekennzeichnet, daß** der Computerprogrammcode wenigstens die folgenden computerausführbaren Computerprogrammelemente aufweist:
- ein Benutzerschnittstellenelement, wobei das Benutzerschnittstellenelement fähig ist, vorgegebene Arbeitsschritte, die in einem vorgegebenen Arbeitsschrittspeicher einer mikrofluidischen Vorrichtung gespeichert sind, anzuzeigen;
- ein Arbeitsschritt-Sammelelement, wobei das Arbeitsschritt-Sammelelement fähig ist, eine Anzahl vorgegebener Arbeitsschritte aus den gespeicherten und angezeigten vorgegebenen mikrofluidischen Vorrichtungsarbeitsschritten zu sammeln;
- ein Hinzufügungselement, wobei das Hinzufügungselement fähig ist, die gesammelten vorgegebenen Arbeitsschritte zu einem provisorischen Satz hinzuzufügen;
- ein Editierprüfungsschrittelement, wobei das Editierprüfungselement fähig ist, einen Editionsprüfungsschritt laufen zu lassen, um den provisorischen Satz von Arbeitsschritten anzunehmen oder abzulehnen, wobei der Editierprüfungsschritt einen Regelsatz, der sich auf den speziellen mikrofluidischen Vorrichtungstyp bezieht, und andere logische Regeln nutzt;
- ein Speicherelement, wobei das Speicherelement fähig ist, den geprüften und angenommenen Satz von Arbeitsschritten des mikrofluidischen Vorrichtungstyps unter einem spezifischen Verfahrensnamen und in einem Format, das für die Übertragung auf den dynamischen Verfahrenssatz anwendbar ist, zu speichern.

8. Computerprogrammelement nach Anspruch 7, **gekennzeichnet durch**:
- ein Verfahrenssammelelement, wobei das Element fähig ist, einen Satz von Arbeitsschritten einer mikrofluidischen Vorrichtung zu sammeln, welcher zu einem spezifischen Verfahrensnamen gehört;
- ein Ausführungsprüfungsschrittelement, wobei das Element fähig ist, den Ausführungsprüfungsschritt durchzuführen, indem es einen Satz von Regeln und Bedingungen anwendet, die sich auf das mikrofluidische System beziehen, auf dem der Satz von Arbeitsschritten verarbeitet werden soll; und
- ein Verarbeitungsschrittelement, wobei das Element fähig ist, die mikrofluidische Vorrichtung unter Verwendung des Satzes von Arbeitsschritten mit dem mikrofluidischen System zu verarbeiten.

9. Computerprogrammelement nach Anspruch 7, **gekennzeichnet durch**:
ein Abfrage- und Erfassungselement, wobei das Element fähig ist, benötigte Arbeitseinstellungen, die zu einem gesammelten und hinzugefügten Arbeitsschritt gehören, abzufragen und zu erfassen.

10. Träger, auf dem sich wenigstens ein dynamischer Verfahrenssatz befindet, der Verfahren umfaßt, die zu einem speziellen mikrofluidischen Vorrichtungstyp gehören, der in einem mikrofluidischen System verwendet wird, das wenigstens eine zentrale Prozessor- und Speichereinrichtung für Computerprogrammcode aufweist, **dadurch gekennzeichnet, daß** jedes Verfahren in dem Satz dynamischer Verfahren für einen speziellen mikrofluidischen Vorrichtungstyp akzeptiert ist und durch einen spezifischen Verfahrensnamen definiert ist, und das Verfahren eine Anzahl von Arbeitsschritten aufweist, die bewirken, daß das mikrofluidische System die Arbeitsschritte in einer vorgegebenen Reihenfolge durchführt.

11. Träger nach Anspruch 10, **dadurch gekennzeichnet, daß** der Träger ein Aufzeichnungsmedium ist.

12. Träger nach Anspruch 10, **dadurch gekennzeichnet, daß** der Träger ein Computerspeicher ist.

13. Träger nach Anspruch 10, **dadurch gekennzeichnet, daß** der Träger ein Nur-Lese-Speicher ist.

14. Träger nach Anspruch 10, **dadurch gekennzeichnet, daß** der Träger ein elektrisches Trägersignal ist.

## Revendications

1. Procédé pour fournir un jeu de méthodes dynamiques incluant des méthodes associées à un type de dispositif microfluidique spécial utilisé dans un système microfluidique comprenant au moins un processeur central et un moyen de stockage pour un code de programme d'ordinateur, **caractérisé en ce que** le procédé inclut les étapes suivantes consistant à :
- afficher des opérations prédéterminées d'opérations prédéterminées de dispositif microfluidique stockées ;
- collecter un nombre d'opérations prédéterminées à partir desdites opérations prédéterminées de dispositif microfluidique stockées et affichées et ajouter lesdites opérations prédéterminées collectées à un jeu temporaire ;
- exécuter une étape de vérification d'édition pour accepter ou rejeter ledit jeu temporaire d'opérations, où ladite étape de vérification d'édition utilise un jeu de règles lié au type de dispositif microfluidique spécial et à d'autres règles logiques ;
- stocker ledit jeu d'opérations de type de dispositif microfluidique vérifié et accepté sous un nom de méthode spécifique et dans un format applicable pour transfert audit jeu de méthodes dynamiques.

2. Procédé selon la revendication 1, **caractérisé en ce que** ledit jeu de méthodes dynamiques associées est dynamique **en ce que** des méthodes et/ou des opérations spécifiques d'application peuvent être ajoutées/amendées/annulées si nécessaire.

3. Procédé selon la revendication 1, **caractérisé en ce que** le procédé inclut en outre une étape d'exécution comprenant les étapes suivantes consistant à :
- collecter un jeu d'opérations de type de dispositif microfluidique associées à un nom de méthode spécifique ;
- effectuer une étape de vérification d'exécution en appliquant un jeu de règles et de conditions liées au système microfluidique où le jeu d'opérations doit être traité ; et
- traiter le dispositif microfluidique avec le système microfluidique en utilisant le jeu d'opérations.

4. Procédé selon la revendication 1, **caractérisé en ce que** lesdites opérations peuvent être l'une des opérations suivantes :
- rotation du dispositif microfluidique ; ou
- transfert d'échantillon vers un canal commun spécifique ou une microstructure commune spécifique ; ou
- transfert de réactif vers un canal commun spécifique ou une microstructure commune spécifique ; ou
- positionnement du dispositif microfluidique ; ou
- incubation ou maintien du dispositif microfluidique pendant un temps spécifique ; ou
- détection ; ou
- lavage.

5. Procédé selon la revendication 1, **caractérisé en ce que** le procédé inclut l'étape suivante consistant à :
- demander et acquérir des réglages d'opérations requises associés à une opération collectée et ajoutée.

6. Produit de programme informatique stocké dans un moyen lisible par un produit de programme informatique, **caractérisé en ce que** le produit de programme est adapté pour effectuer le procédé selon l'une quelconque des revendications 1 à 5.

7. Elément de programme informatique pour fournir un jeu de méthodes dynamiques incluant des méthodes associées à un type de dispositif microfluidique spécial utilisé dans un système microfluidique, **caractérisé en ce que** le code de programme informatique comprend au moins les éléments de programme informatique exécutable par ordinateur suivantes :
- un élément d'interface utilisateur, ledit élément d'interface utilisateur étant capable d'afficher des opérations prédéterminées stockées dans un stockage d'opérations de dispositif microfluidique prédéterminées ;
- un élément collecteur d'opérations, ledit élément collecteur étant capable de collecter un nombre d'opérations prédéterminées à partir desdites opérations de dispositif microfluidique prédéterminées stockées et affichées ;
- un élément d'addition, ledit élément d'addition étant capable d'ajouter lesdites opérations prédéterminées collectées à un jeu temporaire ;
- un élément d'étape de vérification d'édition, ledit élément de vérification d'édition étant capable d'exécuter une étape de vérification d'édition pour accepter ou rejeter ledit jeu temporaire d'opérations, où ladite étape de vérification d'édition utilise un jeu de règles liées au type de dispositif microfluidique spécial et à d'autres règles logiques ;
- un élément de stockage, ledit élément de stockage étant capable de stocker ledit jeu d'opérations de type de dispositif microfluidique vérifié et accepté sous un nom de méthode spécifique et dans un format applicable pour transfert audit jeu de méthodes dynamiques.

8. Elément de programme informatique selon la revendication 7, **caractérisé par** :
- un élément de collecte de méthode, ledit élément étant capable de collecter un jeu d'opérations de type de dispositif microfluidique associées à un nom de méthode spécifique ;
- un élément d'étape de vérification d'exécution, ledit élément étant capable d'effectuer l'étape de vérification d'exécution en appliquant un jeu de règles et de conditions liées au système microfluidique où le jeu d'opérations doit être traité ; et
- un élément d'étape de traitement, ledit élément étant capable de traiter le dispositif microfluidique avec le système microfluidique en utilisant le jeu d'opérations.

9. Elément de programme informatique selon la revendication 7, **caractérisé par** :
- un élément de demande et d'acquisition, ledit élément étant capable de demander et d'acquérir des réglages d'opérations requises associés à une opération collectée et ajoutée.

10. Support portant au moins un jeu de méthodes dynamiques incluant des méthodes associées à un type de dispositif microfluidique spécial utilisé dans un système microfluidique comprenant au moins un processeur central et un moyen de stockage pour un code de programme informatique, **caractérisé en ce que** chaque méthode dans ledit jeu de méthodes dynamiques est acceptée pour un type de dispositif microfluidique spécial et définie par un nom de méthode spécifique et ladite méthode comprend un nombre d'opérations amenant le système microfluidique à effectuer lesdites opérations dans un ordre prédéterminé.

11. Support selon la revendication 10, **caractérisé en ce que** le support est un support d'enregistrement.

12. Support selon la revendication 10, **caractérisé en ce que** le support est une mémoire d'ordinateur.

13. Support selon la revendication 10, **caractérisé en ce que** le support est une mémoire morte.

14. Support selon la revendication 10, **caractérisé en ce que** le support est un signal porteur électrique.
